# EUROPEAN PATENT APPLICATION

(11) **EP 4 818 884 A1**
(43) Date of publication of application: **07.10.2026**
(21) Application number: 25897820.4
(22) Date of filing: 25.11.2025
(51) Int. Cl.: G06F 7/58

(54) **QUANTUM RANDOM NUMBER GENERATOR INTEGRATED ON BASIS OF CO-FIRED CERAMIC**

(30) Priority: 27.11.2024 CN 202411711237
(71) Applicant: Hefei National Laboratory, Hefei 230088 (CN); University of Science and Technology of China, Anhui 230026 (CN)
(72) Inventor: BAI, Bing, Hefei, Anhui 230088 (CN); TANG, Chenyu, Hefei, Anhui 230088 (CN); QIAO, Guanru, Hefei, Anhui 230088 (CN); NIE, Youqi, Hefei, Anhui 230088 (CN); WENG, Zixuan, Hefei, Anhui 230088 (CN); LIU, Naile, Hefei, Anhui 230088 (CN); ZHANG, Jun, Hefei, Anhui 230088 (CN); PAN, Jianwei, Hefei, Anhui 230088 (CN)
(74) Representative: Patentanwälte Geyer, Fehners & Partner mbB
(86) International application number: PCT/CN2025/137424
(87) International publication number: WO 2026/114206

(57) **Abstract**

The present disclosure provides a quantum random number generator based on co-fired ceramic integration, including: a co-fired ceramic substrate; and a quantum state preparation unit, a quantum state measurement chip, a first processing unit, and a second processing unit that are integrated on the co-fired ceramic substrate and connected in sequence. The quantum state preparation unit includes a laser chip, the quantum state measurement chip includes an edge coupler, and a light outlet of the laser chip is three-dimensionally aligned with an input end of the edge coupler by using a preset alignment structure formed on the co-fired ceramic substrate.

## Description

This application claims priority to Chinese Application No. 202411711237.0, filed on November 27, 2024, the content of which is incorporated herein by reference in its entirety.

### TECHNICAL FIELD

The present disclosure relates to the field of quantum random number generation technology, and more particularly to a quantum random number generator based on co-fired ceramic integration.

### BACKGROUND

Random numbers are a widely used fundamental resource with extensive and critical applications across numerous fields, such as cryptography, numerical computation, neural network computing, traditional information security, and quantum communication. A quantum random number generator operates based on fundamental principles of quantum physics, and quantum random numbers generated by a quantum random number generator exhibit unpredictability and non-repeatability. Compared with traditional pseudorandom number generators and noise source random number generators, the quantum random number generator offers a clearer origin of randomness, and the randomness may be rigorously proven using minimum entropy theory. Therefore, the quantum random number generator offers higher security and is particularly suitable for application scenarios with high requirements for randomness. From a practical perspective, a quantum random number generator needs to have characteristics such as a compact size, a high random number generation rate, and a high stability.

In the course of implementing the concepts of the present disclosure, the inventors found that a quantum random number generator may be implemented using a photonic chip solution based on vacuum state fluctuation measurement. However, the photonic chip solution based on vacuum state fluctuation measurement requires continuous-wave laser as an input. Although a silicon-based photonic chip can achieve monolithic integration of passive devices, silicon is an indirect-bandgap semiconductor with very low direct light-emission efficiency, making it difficult to integrate a light source directly on a silicon wafer. If conventional grating coupling or lens coupling is used to introduce laser input, problems of low coupling efficiency and difficulty in controlling the overall size arise. Meanwhile, a quantum random number generator requires a microelectronic circuit to perform randomness extraction and post-processing on raw data. Consequently, there is currently a lack of an effective solution for achieving optoelectronic co-integration of a light source, a passive photonic chip, and a back-end microelectronic circuit.

### SUMMARY

In view of the above, the present disclosure provides a quantum random number generator based on co-fired ceramic integration.

In an aspect of the present disclosure, a quantum random number generator based on co-fired ceramic integration is provided, including: a co-fired ceramic substrate; and a quantum state preparation unit, a quantum state measurement chip, a first processing unit, and a second processing unit that are integrated on the co-fired ceramic substrate and connected in sequence, where the quantum state preparation unit includes a laser chip, the quantum state measurement chip includes an edge coupler, and a light outlet of the laser chip is three-dimensionally aligned with an input end of the edge coupler by using a preset alignment structure formed on the co-fired ceramic substrate.

In the quantum random number generator based on co-fired ceramic integration provided by embodiments of the present disclosure, by integrating the quantum state preparation unit, the quantum state measurement chip, the first processing unit, and the second processing unit on a single co-fired ceramic substrate, a high degree of optoelectronic co-integration of the light source, the passive photonic chip, and the back-end microelectronic circuit is achieved, thereby improving system stability and output bandwidth, and effectively reducing the overall system size of the quantum random number generator while lowering costs. Furthermore, by utilizing the alignment structure pre-designed on the co-fired ceramic substrate, the light outlet of the laser chip may be three-dimensionally aligned with the input end of the edge coupler so as to minimize input losses, thereby ensuring high optical coupling efficiency between the laser chip and the edge coupler.

### BRIEF DESCRIPTION OF THE DRAWINGS

The above and other objectives, features, and advantages of the present disclosure will become more apparent from the following description of embodiments of the present disclosure with reference to the accompanying drawings, in which:
FIG. 1 shows a schematic structural diagram of a quantum random number generator based on co-fired ceramic integration according to an embodiment of the present disclosure;
FIG. 2 shows a top view of a quantum random number generator based on co-fired ceramic integration according to an embodiment of the present disclosure;
FIG. 3 shows a perspective view of a quantum random number generator based on co-fired ceramic integration according to an embodiment of the present disclosure;
FIG. 4 shows a quantum state preparation unit and a quantum state measurement chip according to an embodiment of the present disclosure; and
FIG. 5 shows a schematic principle diagram of a quantum random number generator according to an embodiment of the present disclosure.

Reference Numerals: 100 - quantum random number generator; 1 - co-fired ceramic substrate; D1 - alignment structure; d1 - preset groove; 2 - quantum state preparation unit; 21 - laser chip; 22 - vacuum state input; 3 - quantum state measurement chip; 31 - edge coupler; 32 - passive device; 4 - first processing unit; 41 - first photodetector chip; 42 - transimpedance amplifier; 43 - second photodetector chip; 5 - second processing unit; 51 - operational amplifier; 52 - analog-to-digital converter; 53 - randomness extraction circuit; 54 - microcontroller unit; 55 - memory unit.

### DETAILED DESCRIPTION OF EMBODIMENTS

Embodiments of the present disclosure will be described below with reference to the accompanying drawings. However, it should be understood that these descriptions are merely exemplary and are not intended to limit the scope of the present disclosure. In the following detailed description, for ease of interpretation, many specific details are set forth to provide comprehensive understanding of embodiments of the present disclosure. However, it is clear that one or more embodiments may also be implemented without these specific details. Moreover, in the following description, descriptions of well-known structures and technologies are omitted to avoid unnecessarily obscuring concepts of the present disclosure.

Terms are used herein for the purpose of describing specific embodiments only and are not intended to limit the present disclosure. The terms "including", "containing", etc. used herein indicate the presence of the feature, step, operation and/or component, but do not exclude the presence or addition of one or more other features, steps, operations or components.

All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or overly rigid manner.

In a case of using the expression similar to "at least one of A, B, or C", it should be explained according to the meaning of the expression generally understood by those skilled in the art (for example, "a system including at least one of A, B, or C" should include but not be limited to a system including A alone, a system including B alone, a system including C alone, a system including A and B, a system including A and C, a system including B and C, and/or a system including A, B, and C).

In embodiments of the present disclosure, the collection, updating, analysis, processing, use, transmission, provision, disclosure, and storage of data involved (including but not limited to user personal information) all comply with applicable laws and regulations, are used for legitimate purposes, and do not violate public order or morality. In particular, necessary measures have been taken for user personal information to prevent unauthorized access to user personal information data and to safeguard user personal information security and network security.

In embodiments of the present disclosure, authorization or consent of users has been obtained prior to the collection or acquisition of any user personal information.

Random numbers are a widely used fundamental resource with extensive and critical applications across numerous fields, such as cryptography, numerical computation, neural network computing, traditional information security, and quantum communication. A quantum random number generator operates based on fundamental principles of quantum physics, and quantum random numbers generated by a quantum random number generator exhibit unpredictability and non-repeatability. Compared with traditional pseudorandom number generators and noise source random number generators, the quantum random number generator offers a clearer origin of randomness, and the randomness may be rigorously proven using minimum entropy theory. Therefore, the quantum random number generator offers higher security and is particularly suitable for application scenarios with high requirements for randomness.

At present, quantum random number generators have been implemented using a variety of solutions, such as photon path selection solution, photon arrival time solution, laser phase fluctuation solution, and vacuum state fluctuation measurement solution. From a practical perspective, a quantum random number generator needs to have characteristics such as a compact size, a high random number generation rate, and a high stability. A photonic chip solution based on vacuum state fluctuation measurement does not require an optical interferometer and has a simple optical structure, allowing for single-silicon-chip integration. Quantum state measurement may be performed directly on chip, and a final random number generation rate may reach more than 10 Gbps, meeting the standards of next-generation quantum communication systems for small size, high stability, and high rate, thus offering the best application prospects.

The aforementioned photonic chip solution based on vacuum state fluctuation measurement requires a continuous-wave laser as an input. Although a silicon-based photonic chip can achieve monolithic integration of passive devices, silicon is an indirect-bandgap semiconductor with very low direct light-emission efficiency, making it difficult to integrate a light source directly on a silicon wafer. If conventional grating coupling or lens coupling is used to introduce laser input, problems of low coupling efficiency and difficulty in controlling the overall size arise. Meanwhile, a quantum random number generator requires a microelectronic circuit to perform randomness extraction and post-processing on raw data. Consequently, there is currently a lack of an effective solution for achieving optoelectronic co-integration of a light source, a passive photonic chip, and a back-end microelectronic circuit.

To at least partially address the technical problems existing in the related art, the present disclosure provides a quantum random number generator based on co-fired ceramic integration. The quantum random number generator based on co-fired ceramic integration includes: a co-fired ceramic substrate; and a quantum state preparation unit, a quantum state measurement chip, a first processing unit, and a second processing unit that are integrated on the co-fired ceramic substrate and connected in sequence, where the quantum state preparation unit includes a laser chip, the quantum state measurement chip includes an edge coupler, and a light outlet of the laser chip is three-dimensionally aligned with an input end of the edge coupler by using a preset alignment structure formed on the co-fired ceramic substrate.

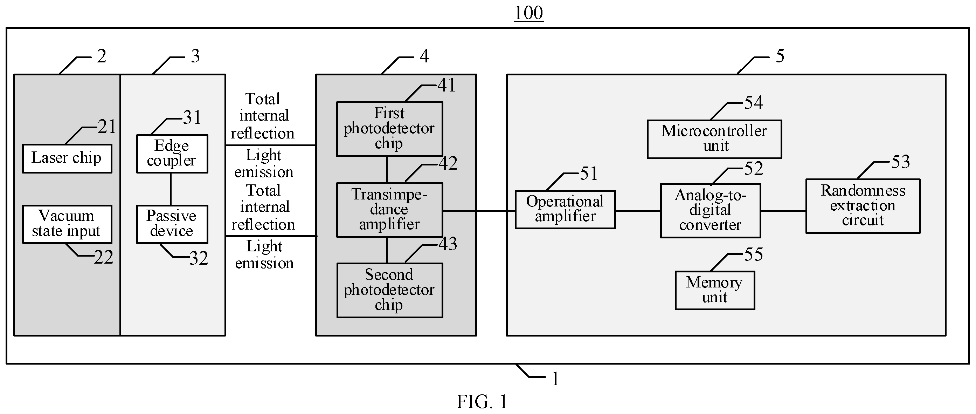

FIG. 1 shows a schematic structural diagram of a quantum random number generator based on co-fired ceramic integration according to an embodiment of the present disclosure.

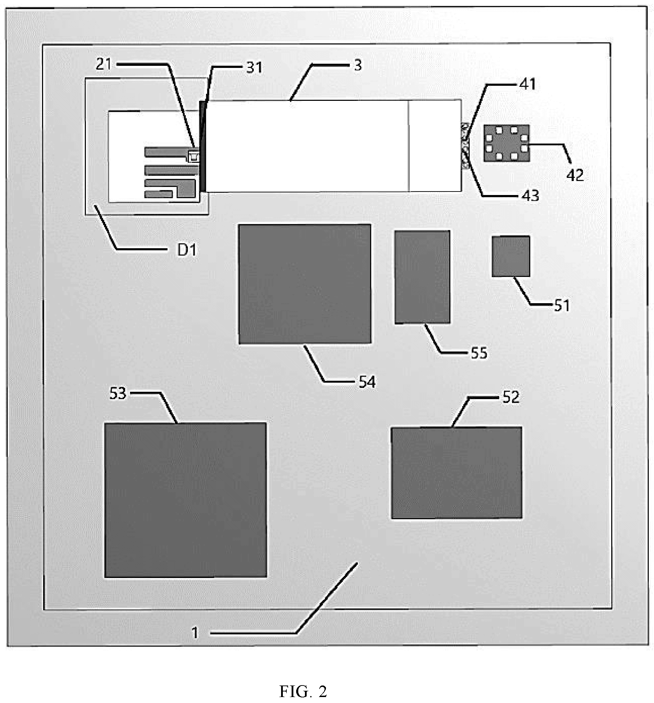

FIG. 2 shows a top view of a quantum random number generator based on co-fired ceramic integration according to an embodiment of the present disclosure.

According to embodiments of the present disclosure, as shown in FIG. 1 and FIG. 2, a quantum random number generator 100 includes: a co-fired ceramic substrate 1; and a quantum state preparation unit 2, a quantum state measurement chip 3, a first processing unit 4, and a second processing unit 5 that are integrated on the co-fired ceramic substrate 1 and connected in sequence. The quantum state preparation unit 2 includes a laser chip 21, and the quantum state measurement chip 3 includes an edge coupler 31. A light outlet of the laser chip 21 is three-dimensionally aligned with an input end of the edge coupler 31 by using a preset alignment structure D1, and the preset alignment structure D1 is formed on the co-fired ceramic substrate 1.

According to embodiments of the present disclosure, the co-fired ceramic substrate may be manufactured from a plurality of monolithic ceramic substrates through processes such as lamination, hot pressing, debinding, and sintering. By virtue of the multilayer structure of the co-fired ceramic substrate, the wiring density is high, and the lengths of interconnect lines may be shortened as much as possible, thereby improving both assembly density and signal transmission speed. As a result, the co-fired ceramic substrate may meet the requirements of the quantum random number generator for system miniaturization, high density, multi-functionality, high reliability, high speed, and high power.

According to embodiments of the present disclosure, the quantum random number generator may generate true random numbers based on principles of quantum physics and exhibit characteristics such as unpredictability, non-repeatability, and unbiasedness, thereby constituting a key core device in a quantum communication system.

According to an embodiment of the present disclosure, the structure of the quantum random number generator may include three parts: entropy source, measurement, and post-processing. The entropy source outputs a quantum state and serves as the origin of quantum randomness. The measurement involves measuring the entropy source to generate initial random numbers. Since initial data are affected by factors such as environmental noise, non-ideal entropy source, and measurement noise, the initial data has a certain degree of bias and correlation. Accordingly, it is necessary to first perform entropy estimation on the raw data, and then extract randomness through post-processing algorithms to finally obtain complete quantum random numbers.

According to embodiments of the present disclosure, as shown in FIG. 1 and FIG. 2, the quantum state preparation unit 2 may be configured to output a quantum state, and the quantum state measurement chip 3 may be configured to measure a random signal generated by quantum fluctuations. The first processing unit 4 and the second processing unit 5 may be configured to process the data to obtain quantum random numbers generated in real time. The co-fired ceramic substrate 1 may serve as a base to carry the quantum state preparation unit 2, the quantum state measurement chip 3, the first processing unit 4, and the second processing unit 5 described above, and provide electronic connections for these units.

According to embodiments of the present disclosure, the co-fired ceramic substrate 1 may provide physical support and electronic connections for the quantum state preparation unit 2, the quantum state measurement chip 3, the first processing unit 4, and the second processing unit 5, thereby achieving a high degree of optoelectronic integration of the light source, the passive photonic chip, and the back-end microelectronic circuit. This improves system stability and output bandwidth, and effectively reduces the overall system size of the quantum random number generator 100 while reducing costs. By way of example only, compared with a solution using lens-based optical coupling combined with a heat-sink substrate, the overall system volume of the quantum random number generator 100 provided in embodiments of the present disclosure is reduced by 50%.

According to embodiments of the present disclosure, quantum random number generators may be classified into discrete-type or continuous-type according to different random sources.

According to an embodiment of the present disclosure, in a continuous-type quantum random number generator, continuous laser pulses is adopted as the entropy source, and a single measurement may yield multiple random bits and is not limited by single-photon detectors, resulting in a higher quantum random number generation rate. A representative example is a quantum random number generator based on vacuum shot noise. The essence of vacuum shot noise is the statistical fluctuations in measurement data caused by vacuum fluctuations. The measured values of the quadrature component X or P of the vacuum state manifest as Gaussian random variables, and the quadrature component of the vacuum state may typically be measured using a homodyne detection device. For example, this may be implemented using a photonic chip solution based on vacuum state fluctuation measurement. The advantage of this solution is that the vacuum state is easy to prepare, the system is simple and easy to integrate. Moreover, shot noise is theoretically white noise with infinite bandwidth, thus a large amount of raw random numbers may be obtained in a single sampling.

According to embodiments of the present disclosure, a coherent state is a pure state in quantum mechanics that most closely approximates a classical optical field. The photon number distribution in a coherent state follows a Poisson distribution, and the quantum noise in its two orthogonal components is equal, satisfying the minimum uncertainty relation. In practical applications, the coherent state is commonly used to describe the optical field output by a laser device. A vacuum state is a special case of a photon number state where n=0, representing a quantum state without any photons. Although no photons are present in the vacuum state, quantum fluctuations of the electromagnetic field still exist, and such fluctuations are referred to as vacuum fluctuations. The vacuum state represents the lowest limit of quantum noise, also known as the quantum noise limit. In a quantum random number generator, fluctuations of the vacuum state may serve as the source for generating true random numbers.

According to embodiments of the present disclosure, as shown in FIG. 1 and FIG. 2, the quantum state preparation unit 2 includes a laser chip 21, and the quantum state measurement chip 3 includes an edge coupler 31. The laser chip 21 is configured to provide a continuous-wave laser, i.e., coherent state light. One input end of the edge coupler 31 receives the coherent state light output by the laser chip 21, while the other input end is left vacant to serve as a vacuum state input 22. The light outlet of the laser chip 21 is three-dimensionally aligned with the input end of the edge coupler 31 by using the preset alignment structure D1, which is formed on the co-fired ceramic substrate 1. By way of example, the alignment structure D1 may be selected as a groove structure, a protrusion structure, or the like.

According to embodiments of the present disclosure, the edge coupler 31 may be understood as a coupler located at an edge of the photonic chip. The edge coupler may enable efficient transmission of optical signals through precise alignment between the photonic chip and the light source, offering advantages such as high coupling efficiency and wide operating bandwidth.

It may be understood that the three-dimensional alignment between the edge coupler 31 and the light source is critical for achieving high optical coupling efficiency of the edge coupler 31. This is because only when the light emitted by the light source (e.g., the laser chip 21) precisely matches the optical mode field (mode spot) of the edge coupler 31, a maximum reduction in light reflection and scattering may be achieved, thereby improving optical transmission efficiency. By way of example, the three-dimensional alignment may include vertical alignment (ensuring height alignment of the light beam with the waveguide end face), horizontal alignment (ensuring the light beam is centered on the waveguide end face to maximize optical coupling efficiency), and angular alignment (ensuring a correct angle between the light beam and the waveguide axis).

According to embodiments of the present disclosure, by utilizing the alignment structure D1 pre-designed on the co-fired ceramic substrate 1, the light outlet of the laser chip 21 may be three-dimensionally aligned with the input end of the edge coupler 31 so as to minimize input losses, thereby ensuring high optical coupling efficiency between the laser chip 21 and the edge coupler 31.

Thus, in the quantum random number generator 100 based on co-fired ceramic integration provided by embodiments of the present disclosure, by integrating the quantum state preparation unit 2, the quantum state measurement chip 3, the first processing unit 4, and the second processing unit 5 on a single co-fired ceramic substrate 1, a high degree of optoelectronic integration of the light source, the passive photonic chip, and the back-end microelectronic circuit is achieved, thereby improving system stability and output bandwidth, and effectively reducing the overall system size of the quantum random number generator 100 while lowering costs. Furthermore, by utilizing the alignment structure D1 pre-designed on the co-fired ceramic substrate 1, the light outlet of the laser chip 21 may be three-dimensionally aligned with the input end of the edge coupler 31 so as to minimize input losses, thereby ensuring high optical coupling efficiency between the laser chip 21 and the edge coupler 31.

According to embodiments of the present disclosure, a preset groove d1 is formed on the co-fired ceramic substrate 1, the laser chip 21 is fixed within the preset groove, and the light outlet of the laser chip 21 is three-dimensionally aligned with the edge coupler 31 by using the preset groove d1.

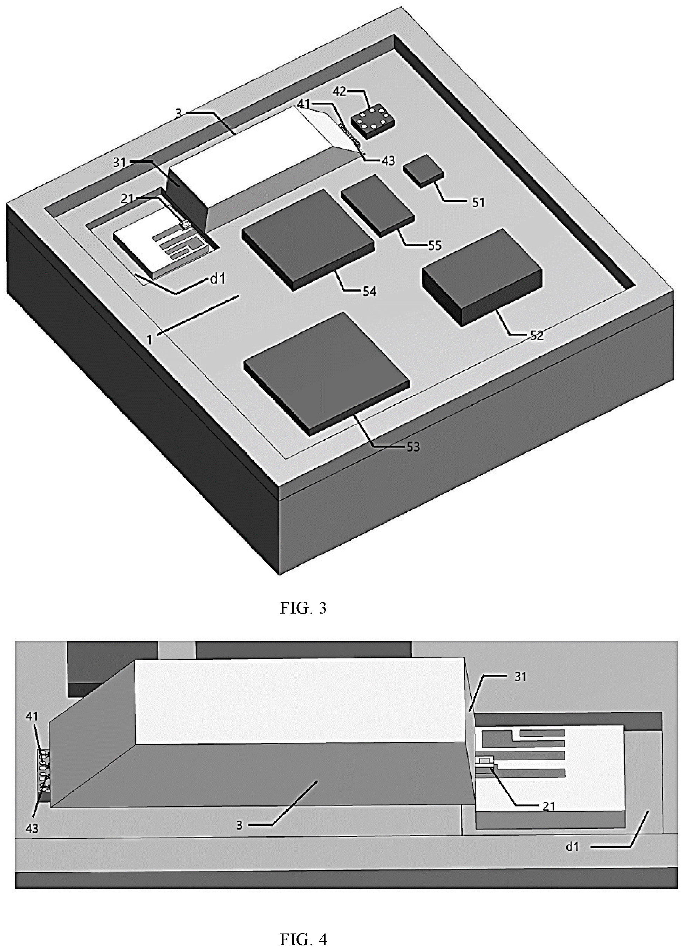

FIG. 3 shows a perspective view of a quantum random number generator based on co-fired ceramic integration according to an embodiment of the present disclosure. FIG. 4 shows a quantum state preparation unit and a quantum state measurement chip according to an embodiment of the present disclosure.

According to an embodiment of the present disclosure, as shown in FIG. 3 and FIG. 4, a preset groove d1 is formed on the co-fired ceramic substrate 1. The laser chip 21 is fixed within the preset groove d1, and the light outlet of the laser chip 21 is three-dimensionally aligned with the edge coupler 31 by using the preset groove d1.

By way of example only, based on the multilayer structure and fabrication process of the co-fired ceramic substrate 1, during fabrication of the co-fired ceramic substrate 1, the preset groove d1 may be formed on at least one layer of monolithic ceramic substrate by mechanical punching, laser drilling, or similar means, so that three-dimensional alignment between the light outlet of the laser chip 21 and the input end of the edge coupler 31 may be achieved by using the preset groove d1.

Compared with a protrusion structure, the solution of forming a groove structure on the co-fired ceramic substrate offers advantages such as simpler process, less material consumption, lower costs, and higher integration density.

According to embodiments of the present disclosure, a depth of the preset groove d1 is determined according to a height difference between the laser chip 21 and the edge coupler 31. The depth of the preset groove d1 ensures that the light outlet of the laser chip 21 is vertically aligned with the input end of the edge coupler 31. A fixed position of the laser chip 21 within the preset groove d1 is determined based on a maximum optical coupling efficiency between the laser chip 21 and the edge coupler 31.

According to embodiments of the present disclosure, as shown in FIG. 3 and FIG. 4, the height difference between the laser chip 21 and the edge coupler 31 may be precisely measured first, and the height difference is then determined as the depth of the preset groove d1. In this way, the light outlet of the laser chip 21 may be vertically aligned with the input end of the edge coupler 31 based on the preset groove d1, thereby ensuring the height alignment of the light emitted by the laser chip 21 with the waveguide end face.

According to embodiments of the present disclosure, as shown in FIG. 3 and FIG. 4, the maximum optical coupling efficiency between the laser chip 21 within the preset groove d1 and the edge coupler 31 may be determined first, and a position corresponding to the maximum optical coupling efficiency is then determined as the fixed position of the laser chip 21. In this way, the light outlet of the laser chip 21 may be aligned with the input end of the edge coupler 31 in both the horizontal direction and the angular orientation based on the preset groove d1.

Thus, based on the preset groove d1 formed on the co-fired ceramic substrate 1, three-dimensional alignment between the light outlet of the laser chip 21 and the input end of the edge coupler 31 may be achieved, thereby effectively reducing optical losses and ensuring high optical coupling efficiency between the laser chip 21 and the edge coupler 31.

According to embodiments of the present disclosure, a method of fixing the laser chip 21 includes: placing the laser chip 21 into the preset groove d1 such that the light outlet of the laser chip 21 is vertically aligned with the input end of the edge coupler 31; moving the laser chip 21 within the preset groove d1 according to a preset step size in a horizontal plane direction to determine the maximum optical coupling efficiency between the laser chip 21 and the edge coupler 31; determining a position corresponding to the maximum optical coupling efficiency as the fixed position of the laser chip 21, and fixing the laser chip 21 at the fixed position such that the light outlet of the laser chip 21 is three-dimensionally aligned with the input end of the edge coupler 31.

As an example, since the depth of the preset groove d1 is determined according to the height difference between the laser chip 21 and the edge coupler 31, placing the laser chip 21 into the preset groove d1 enables vertical alignment between the light outlet of the laser chip 21 and the input end of the edge coupler 31. In the horizontal plane direction, an energized fixture may be used to hold the laser chip 21 and move the laser chip 21 within the preset groove d1 according to a preset step size. Furthermore, an electric coupling stage may be connected to the laser chip 21. Since the energized fixture is electrically conductive and holds the laser chip 21, an electrical connection is established between the electric coupling stage and the laser chip 21, thereby enabling measurement of the optical coupling efficiency between the laser chip 21 and the edge coupler 31. By measuring the optical coupling efficiency at various positions within the preset groove d1, the position corresponding to the maximum optical coupling efficiency may be identified, which is determined as the fixed position of the laser chip 21. The laser chip 21 may be fixed at the fixed position by adhesive dispensing, thereby achieving fixation of the laser chip 21.

Preferably, alignment errors between the light outlet of the laser chip 21 and the input end of the edge coupler 31 in the front-back, left-right, and up-down directions should all be controlled within 50 µm so as to ensure high-efficiency coupling of the optical signal.

According to embodiments of the present disclosure, the quantum state measurement chip 3 further includes a passive device 32, which is integrated on the quantum state measurement chip 3. An output end of the quantum state measurement chip 3 is configured as an angled structure, such that the optical signal undergoes total internal reflection at the output end of the quantum state measurement chip 3 to change an emission direction of the optical signal from a horizontal direction to a vertical direction.

According to embodiments of the present disclosure, as shown in FIG. 1 to FIG. 4, the quantum state measurement chip 3 further includes a passive device 32 integrated on the chip. The quantum state measurement chip 3 is configured to receive the optical signal output by the edge coupler 31 and perform quantum state measurement. The quantum state measurement chip 3 may be, for example, a silicon-based photonic chip. By way of example, the edge receiver may couple the continuous-wave laser input from the laser chip 21 into the quantum state measurement chip 3, so that the optical signal may be output to the passive device 32 integrated on the quantum state measurement chip 3.

According to embodiments of the present disclosure, based on refractive index characteristics of silicon dioxide waveguides, the output end of the quantum state measurement chip 3 is configured as an angled structure. Preferably, an angle of the angled structure may be set to 45°. The optical signal undergoes total internal reflection at the output end of the quantum state measurement chip 3, and the emission direction of the optical signal is changed from a horizontal direction to a vertical direction.

According to embodiments of the present disclosure, the optical signal includes a coherent state sub-signal and a vacuum state sub-signal. The first processing unit 4 includes a first photodetector chip 41, a transimpedance amplifier 42, and a second photodetector chip 43, and the first photodetector chip 41 and the second photodetector chip 43 are connected to the transimpedance amplifier 42. The first photodetector chip 41 and the second photodetector chip 43 are configured to receive the coherent state sub-signal output by the quantum state measurement chip 3 and the vacuum state sub-signal output by the quantum state measurement chip 3. The first photodetector chip 41 is configured to output a first electrical signal, the second photodetector chip 43 is configured to output a second electrical signal, and the transimpedance amplifier 42 is configured to receive a differential-mode signal between the first electrical signal and the second electrical signal. A photosensitive surface of the first photodetector chip 41 is perpendicular to the emission direction of the coherent state sub-signal, and an electrode of the first photodetector chip 41 is horizontally bonded to an electrode of the co-fired ceramic substrate 1. A photosensitive surface of the second photodetector chip 43 is perpendicular to the emission direction of the vacuum state sub-signal, and an electrode of the second photodetector chip 43 is horizontally bonded to an electrode of the co-fired ceramic substrate 1.

According to embodiments of the present disclosure, the first processing unit 4 is configured to perform photoelectric conversion and amplification on the optical signal. As shown in FIG. 1 to FIG. 4, the first processing unit 4 includes a first photodetector chip 41, a transimpedance amplifier 42, and a second photodetector chip 43, and the first photodetector chip 41 and the second photodetector chip 43 are connected to the transimpedance amplifier 42. The first photodetector chip 41 and the second photodetector chip 43 are configured to perform photoelectric conversion, and the transimpedance amplifier 42 is configured to amplify the signal.

According to an embodiment of the present disclosure, the first photodetector chip 41 and the second photodetector chip 43 have the same structure and are preferably low-noise and high-responsivity photodetector chips. The first photodetector chip 41 and the second photodetector chip 43 are configured to receive the coherent state sub-signal and the vacuum state sub-signal output by the quantum state measurement chip 3. The first photodetector chip 41 is configured to output a first electrical signal, and the second photodetector chip 43 is configured to output a second electrical signal. The transimpedance amplifier 42 is configured to receive a differential-mode signal between the first electrical signal and the second electrical signal. The first electrical signal represents a detection result of the first photodetector chip 41 for the coherent state sub-signal and the vacuum state sub-signal, and the second electrical signal represents a detection result of the second photodetector chip 43 for the coherent state sub-signal and the vacuum state sub-signal. A difference between the first electrical signal and the second electrical signal may be determined as the differential-mode signal, which may be used to represent the vacuum state sub-signal.

According to an embodiment of the present disclosure, the photosensitive surface and the electrode of a photodetector chip are located on the same plane. If the light output direction of the quantum state measurement chip 3 is the horizontal direction, the photosensitive surface of the photodetector chip would need to be arranged along a vertical plane, making it difficult to bond the electrode of the photodetector chip to the substrate electrode. However, in embodiments of the present disclosure, the output end of the quantum state measurement chip 3 is configured as an angled structure, such that the optical signal undergoes total internal reflection at the output end of the quantum state measurement chip 3 to change the emission direction of the optical signal from the horizontal direction to the vertical direction. Accordingly, the photosensitive surface of the photodetector chip may face upward to receive the optical signal output by the quantum state measurement chip 3, while the electrode of the photodetector chip may be directly bonded horizontally to the substrate electrode.

It may be understood that by designing the angled structure at the output end of the quantum state measurement chip 3, the emission direction of the optical signal is changed from the horizontal direction to the vertical direction, so that the first photodetector chip 41 and the second photodetector chip 43 may be compactly integrated in proximity to the quantum state measurement chip 3. Meanwhile, the electrodes of the first photodetector chip 41 and the second photodetector chip 43 may be directly bonded horizontally to the substrate electrodes, thereby improving the output bandwidth and reducing the system volume and noise crosstalk.

According to embodiments of the present disclosure, the second processing unit 5 includes: an operational amplifier 51, an analog-to-digital converter 52, a randomness extraction circuit 53, a microcontroller unit 54, and a memory unit 55. The operational amplifier 51, the analog-to-digital converter 52, and the randomness extraction circuit 53 are connected in sequence, and an output end of the transimpedance amplifier 42 is connected to an input end of the operational amplifier 51.

According to embodiments of the present disclosure, the second processing unit 5 is configured to acquire an electrical signal representing quantum fluctuations and to perform post-processing on the electrical signal. As shown in FIG. 1 to FIG. 4, the second processing unit 5 includes an operational amplifier 51, an analog-to-digital converter 52, a randomness extraction circuit 53, a microcontroller unit (MCU) 54, and a memory unit 55.

According to embodiments of the present disclosure, as shown in FIG. 1 to FIG. 4, the operational amplifier 51, the analog-to-digital converter 52, and the randomness extraction circuit 53 are connected in sequence, and the output end of the transimpedance amplifier 42 is connected to the input end of the operational amplifier 51.

According to embodiments of the present disclosure, the transimpedance amplifier 42, the operational amplifier 51, the analog-to-digital converter 52, the randomness extraction circuit 53, the microcontroller unit 54, and the memory unit 55 are all connected to the electrodes of the co-fired ceramic substrate 1 by surface mounting.

According to embodiments of the present disclosure, connection by surface mounting is conducive to achieving high-bandwidth, compact, and low-noise optoelectronic integration of the quantum random number generator 100.

According to embodiments of the present disclosure, the edge coupler 31 is configured as a silicon-based inversed-taper structure.

According to embodiments of the present disclosure, the edge coupler 31 having the silicon-based inversed-taper structure may expand a mode field radius of the waveguide, thereby improving mode spot matching between the waveguide and the laser and further enhancing the optical coupling efficiency.

According to embodiments of the present disclosure, a coefficient of thermal expansion of the co-fired ceramic substrate 1 is in a range of 3.9 × 10⁻⁶ /°C to 5.5 × 10⁻⁶ /°C, and a temperature coefficient of dielectric constant of the co-fired ceramic substrate 1 is in a range of 10 ppm/K to 20 ppm/K.

According to embodiments of the present disclosure, owing to the low coefficient of thermal expansion and low temperature coefficient of dielectric constant of the co-fired ceramic substrate 1, a deformation amplitude of the co-fired ceramic substrate 1 in a high-temperature environment is extremely small. This ensures that the optical connections among the laser chip 21, the edge coupler 31, the quantum state measurement chip 3, and the photodetector chips are not easily affected by the high-temperature environment, thereby ensuring that the high optical coupling efficiency between the laser chip 21 and the edge coupler 31 remains stable. Furthermore, without affecting the optical coupling efficiency, the co-fired ceramic substrate 1 may provide the quantum random number generator 100 with a wide operating temperature range, meeting the industrial-grade standard of -40°C to 85°C.

According to an embodiment of the present disclosure, the co-fired ceramic substrate 1 may be selected as a low temperature co-fired ceramic (LTCC) substrate, or alternatively as a high temperature co-fired ceramic (HTCC) substrate.

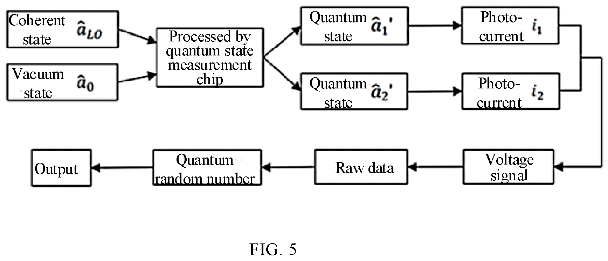

FIG. 5 shows a schematic principle diagram of a quantum random number generator according to an embodiment of the present disclosure.

According to embodiments of the present disclosure, as shown in FIG. 5, the laser chip 21 provides continuous-wave laser, namely a coherent state sub-signal *â_{LO}*, which enters one input end of the quantum state measurement chip 3 via the edge coupler 31. The other input end of the quantum state measurement chip 3 is left vacant to serve as an input of a vacuum state sub-signal *â*₀.

As shown in FIG. 5, after the coherent state sub-signal *â_{LO}* and the vacuum state sub-signal *â*₀ are processed by the passive device 32 integrated on the quantum state measurement chip 3, two paths of different quantum state light are output, referred to as quantum state *â*₁' and quantum state *â*₂', respectively.

As shown in FIG. 5, these two paths of quantum state light respectively undergo photoelectric conversion through the first photodetector chip 41 and the second photodetector chip 43, thereby generating two paths of photocurrent. Specifically, photocurrent *i*₁ corresponds to the first electrical signal mentioned above, and photocurrent *i*₂ corresponds to the second electrical signal mentioned above. The two paths of photocurrent are input to the transimpedance amplifier 42, which amplifies weak high-frequency current signals and converts them into a voltage signal. The voltage signal is the random signal generated by quantum fluctuations.

As shown in FIG. 5, the voltage signal output by the transimpedance amplifier 42 is still weak and needs to be further amplified by the operational amplifier 51 before it can be acquired and quantized by the analog-to-digital converter 52. The amplified voltage signal enters the analog-to-digital converter 52 and is converted to generate raw data. After post-processing by the randomness extraction circuit 53, quantum random numbers generated in real time may be obtained. During this process, the memory unit 55 performs configuration of the randomness extraction circuit 53, and the microcontroller unit 54 is responsible for command issuance and overall control of the circuit.

The operating principle of the quantum random number generator according to embodiments of the present disclosure will be described in detail below with reference to FIG. 1 to FIG. 5.

Quantum fluctuations exist in coherent state optical fields, adhering to the minimum uncertainty principle in terms of amplitude and phase. The essence of the random number solution is quantifying and extracting these coherent state quantum fluctuations. In embodiments of the present disclosure, balanced detection is performed using two photodetector chips on the two paths of light output from the quantum state measurement chip 3, thereby manifesting the randomness.

One path from the laser chip 21 serves as an input of a local oscillator light source (i.e., continuous-wave laser), while the other path is left vacant (i.e., vacuum state light).

Assuming the two input quantum states are denoted as â₁, â₂, and letting â₁ = | α _{LO} > , â₂ = |0 >. After processing by the passive device 32 on the quantum state measurement chip 3, the quantum states of the two paths of output light are denoted as â₁^{'}, â₂', satisfying the following relationships: ${\hat{a}}_{1} ′ = \frac{{\hat{a}}_{LO} + {\hat{a}}_{0}}{\sqrt{2}}$ (1) ${\hat{a}}_{2} ′ = \frac{{\hat{a}}_{LO} - {\hat{a}}_{0}}{\sqrt{2}}$ (2)

In Equation (1) and Equation (2), *â*₀ = *â*₂ = |0 > represents a vacuum state.

After photoelectric conversion, the currents passing through the first photodetector chip 41 and the second photodetector chip 43 are as follows: ${i}_{1} = {\hat{a}}_{1} {′}^{+} {\hat{a}}_{1} ′ = \frac{k}{2} \left({{\hat{a}}_{LO}}^{+}+{{\hat{a}}_{0}}^{+}\right) \left({\hat{a}}_{LO}+{\hat{a}}_{0}\right)$ (3) ${i}_{2} = {\hat{a}}_{2} {′}^{+} {\hat{a}}_{2} ′ = \frac{k}{2} \left({{\hat{a}}_{LO}}^{+}-{{\hat{a}}_{0}}^{+}\right) \left({\hat{a}}_{LO}-{\hat{a}}_{0}\right)$ (4)

In Equation (3) and Equation (4), *k* represents a quantum efficiency of the photodetector, â₁^{'+}*â*₁^{'}, *â*₂^{'+}*â*₂ respectively correspond to light intensities of the two inputs to the photodetectors; the superscript "+" in *â*_{LO}⁺, *â*₀⁺ indicates the Hermitian conjugate of the quantum states of *â_{LO}* and *â*₀.. The current value should be equal to the product of the quantum efficiency and the light intensity. The difference Δ*i* between the two paths of current may be expressed as follows: $Δ i = k \left({{\hat{a}}_{LO}}^{+}{\hat{a}}_{0}+{{\hat{a}}_{0}}^{+}{\hat{a}}_{LO}\right)$ (5)

It may be proven that: $\left〈Δi\right〉 = 0 , \left〈{Δi}^{2}\right〉 = {k}^{2} {\left|{\hat{a}}_{0}\right|}^{2}$ (6)

In Equation (6), 〈Δ*i*²〉 corresponds to the quantum noise *σ_{q}*². The quantum noise is manifested in the result of the balanced detection. In embodiments of the present disclosure, the distribution of noise *σₜₒₜₐₗ*² obtained by the data acquisition and post-processing circuit consists of two parts, including quantum noise *σ_{q}*² and classical noise *σₑ*², expressed as follows: ${{σ}_{total}}^{2} = {{σ}_{q}}^{2} + {{σ}_{e}}^{2}$ (7)

The continuous-wave laser is a coherent light source, and its average number of photons is denoted as *µ*. For a coherent light source, the number of photons *n* follows a Poisson distribution P(*n*), which is expressed by Equation (8) below. $P \left(n\right) = {\left|\left〈n\left|\frac{{α}_{LO}}{\sqrt{2}}\right.\right〉\right|}^{2} = {e}^{- μ} \frac{{μ}^{n}}{n !}$ (8)

After homodyne detection is performed on the photoelectric detection results of the two photodetectors, the number of photons *pₖ* follows a Skellam distribution, which is expressed by Equation (9) below. ${p}_{k} = P \left({n}_{1}-{n}_{2}=k\right) = {e}^{- 2 μ} {I}_{k} \left(2μ\right)$ (9)

In Equation (9), *Iₖ*(2*µ*) represents a modified Bessel function; *n*₁ and *n*₂ respectively correspond to the average numbers of photons of the two paths of light, and are also two parameters of the Skellam distribution that determine the shape of this distribution.

In embodiments of the present disclosure, the quantum noise distribution may be obtained through the above calculations.

Classical noise in the system follows a Gaussian distribution. By merely measuring the classical noise *σₑ*² occurring when no light is input, the proportion of quantum noise may be calculated.

The minimum entropy *H*_{∞} is calculated by calculating the quantum noise distribution. The randomness is quantified by the minimum entropy, and may be defined as follows: ${H}_{∞} = - {log}_{2} {p}_{max}$ (10)

In Equation (10), *pₘₐₓ* represents a probability of the most likely outcome. The random numbers generated from vacuum state fluctuations follow the Skellam distribution. From the aforementioned quantum noise variance *σ_{q}*², *pₘₐₓ* may be determined, and then the minimum entropy may be calculated.

In the final random number post-processing, a Toeplitz matrix algorithm based on the Fast Fourier Transform is employed. With a matrix size of n × m, m bits of final random numbers may be extracted from n bits of raw quantum random number data, satisfying the relationship of n/m ≤ *H*_{∞}. After the above processing, the final quantum random numbers may be obtained, whose randomness originates from the fundamental principles of quantum physics and is information-theoretically provable.

In the above solution, the minimum entropy of the raw data is calculated according to the measurement results. The measurement results may be obtained in real time within the randomness extraction circuit 53, thereby enabling accurate estimation of the minimum entropy. After post-processing of the raw data, the final quantum random numbers based on vacuum state fluctuations may be obtained in real time. Through the above solution, high-speed and stable quantum random numbers may be obtained.

It may be understood by those skilled in the art that the features recorded in the various embodiments of the present disclosure may be combined and/or integrated in various ways, even if such combinations and/or integrations are not explicitly recorded in the present disclosure. In particular, without departing from the spirit and teaching of the present disclosure, the features recorded in the various embodiments of the present disclosure may be combined and/or integrated in various ways. All such combinations and/or integrations fall within the scope of the present disclosure.

The embodiments of the present disclosure have been described above. However, these embodiments are for the purpose of illustration only and are not intended to limit the scope of the present disclosure. Although the embodiments have been described above separately, it does not mean that the measures in the various embodiments cannot be used advantageously in combination. Without departing from the scope of the present disclosure, various substitutions and modifications may be made by those skilled in the art, and such substitutions and modifications should fall within the scope of the present disclosure.

## Claims

1. A quantum random number generator based on co-fired ceramic integration, comprising:
a co-fired ceramic substrate; and
a quantum state preparation unit, a quantum state measurement chip, a first processing unit, and a second processing unit that are integrated on the co-fired ceramic substrate and connected in sequence, wherein the quantum state preparation unit comprises a laser chip, the quantum state measurement chip comprises an edge coupler, and a light outlet of the laser chip is three-dimensionally aligned with an input end of the edge coupler by using a preset alignment structure formed on the co-fired ceramic substrate.

2. The quantum random number generator of claim 1, wherein a preset groove is formed on the co-fired ceramic substrate, the laser chip is fixed within the preset groove, and the light outlet of the laser chip is three-dimensionally aligned with the edge coupler by using the preset groove.

3. The quantum random number generator of claim 2, wherein:
a depth of the preset groove is determined according to a height difference between the laser chip and the edge coupler, such that the light outlet of the laser chip is vertically aligned with the input end of the edge coupler; and
a fixed position of the laser chip within the preset groove is determined based on a maximum optical coupling efficiency between the laser chip and the edge coupler.

4. The quantum random number generator of claim 3, wherein the laser chip is fixed by:
placing the laser chip into the preset groove such that the light outlet of the laser chip is vertically aligned with the input end of the edge coupler;
moving the laser chip within the preset groove according to a preset step size in a horizontal plane direction to determine the maximum optical coupling efficiency between the laser chip and the edge coupler; and
determining a position corresponding to the maximum optical coupling efficiency as the fixed position of the laser chip, and fixing the laser chip at the fixed position such that the light outlet of the laser chip is three-dimensionally aligned with the input end of the edge coupler.

5. The quantum random number generator of any one of claims 1 to 4, wherein:
the quantum state measurement chip further comprises a passive device integrated on the quantum state measurement chip; and
an output end of the quantum state measurement chip is configured as an angled structure, such that an optical signal undergoes total internal reflection at the output end of the quantum state measurement chip to change an emission direction of the optical signal from a horizontal direction to a vertical direction.

6. The quantum random number generator of claim 5, wherein the optical signal comprises a coherent state sub-signal and a vacuum state sub-signal,
the first processing unit comprises a first photodetector chip, a transimpedance amplifier, and a second photodetector chip, the first photodetector chip and the second photodetector chip are connected to the transimpedance amplifier, the first photodetector chip and the second photodetector chip are configured to receive the coherent state sub-signal output by the quantum state measurement chip and the vacuum state sub-signal output by the quantum state measurement chip, the first photodetector chip is configured to output a first electrical signal, the second photodetector chip is configured to output a second electrical signal, and the transimpedance amplifier is configured to receive a differential-mode signal between the first electrical signal and the second electrical signal; and
wherein a photosensitive surface of the first photodetector chip is perpendicular to an emission direction of the coherent state sub-signal, and an electrode of the first photodetector chip is horizontally bonded to an electrode of the co-fired ceramic substrate; and a photosensitive surface of the second photodetector chip is perpendicular to an emission direction of the vacuum state sub-signal, and an electrode of the second photodetector chip is horizontally bonded to an electrode of the co-fired ceramic substrate.

7. The quantum random number generator of claim 6, wherein the second processing unit comprises: an operational amplifier, an analog-to-digital converter, a randomness extraction circuit, a microcontroller unit, and a memory unit, wherein the operational amplifier, the analog-to-digital converter, and the randomness extraction circuit are connected in sequence, and an output end of the transimpedance amplifier is connected to an input end of the operational amplifier.

8. The quantum random number generator of claim 7, wherein the transimpedance amplifier, the operational amplifier, the analog-to-digital converter, the randomness extraction circuit, the microcontroller unit, and the memory unit are connected to electrodes of the co-fired ceramic substrate by surface mounting.

9. The quantum random number generator of any one of claims 1 to 4, wherein the edge coupler is configured as a silicon-based inversed-taper structure.

10. The quantum random number generator of any one of claims 1 to 4, wherein a coefficient of thermal expansion of the co-fired ceramic substrate is in a range of 3.9 × 10⁻⁶ /°C to 5.5 × 10⁻⁶ /°C, and a temperature coefficient of dielectric constant of the co-fired ceramic substrate is in a range of 10 ppm/K to 20 ppm/K.
